# EUROPEAN PATENT APPLICATION

(11) **EP 1 424 119 A2**
(43) Date of publication of application: **02.06.2004**
(21) Application number: 03254392.8
(22) Date of filing: 11.07.2003
(51) Int. Cl.: B01D 29/66, B01D 35/12

(54) **Filter apparatus with cleaning means**

(30) Priority: 29.11.2002 JP 2002348656
(71) Applicant: TAISEI KOGYO CO., LTD., Tokyo 174-86770 (JP)
(72) Inventor: Mukai, Umio, Tokyo (JP)
(74) Representative: Alton, Andrew

(57) **Abstract**

A filter (2) is provided within a case (1). A to-be-filtered fluid flowing into the case is passed through a peripheral wall of the filter (2). Thereby, foreign matter included in the to-be-filtered fluid is captured by filtration. A cleaning member (3) is provided within the case (1). The cleaning member (3) pressurizes the to-be-filtered fluid by a pressure fluid, and causes the pressurized to-be-filtered fluid to pass through the peripheral wall of the filter (2) in a direction reverse to a direction in which the to-be-filtered fluid is filtered. When foreign matter captured in the filter (2) is to be removed and cleaned, the to-be-filtered fluid remaining in the case (1) is pressurized by the cleaning member (3) and caused to flow in a direction reverse to a direction in which the to-be-filtered fluid is filtered. Thereby, foreign matter captured by the peripheral wall of the filter is removed.

## Description

The present invention relates to a filter apparatus that removes foreign matter included in a to-be-filtered fluid such as oil.

A hydraulic circuit, for example, is provided with a filter apparatus for filtering oil flowing through a conduit, thereby removing foreign matter included in the oil.

In the filter apparatus, a cylindrical filter is provided within a case. A fluid to be filtered (hereinafter referred to as "to-be-filtered fluid"), which flows in the case, is made to pass through the filter from an outer peripheral side to an inner peripheral side of the filter. Thereby, foreign matter included in the to-be-filtered fluid is captured by the filter. There is known another type of filter apparatus wherein the to-be-filtered fluid is made to pass through the filter from an inner peripheral side to an outer peripheral side of the filter, thus discharging the filtered fluid from the case to the outside.

In the conventional filter apparatus, if the amount of foreign matter included in the to-be-filtered fluid, which adheres to the filter, increases and the filter clogs, the foreign matter adhering to the filter is removed to eliminate clogging of the filter by methods described below.

In a first method, the flow of a to-be-filtered fluid is stopped and the case is opened. The filter is taken out of the case, and foreign matter adhering to the filter is removed by means of a brush, etc. Then, the filter is set in the case.

A second method is generally called "reverse washing". A to-be-filtered fluid is caused to flow into the case from the outside in a direction opposite to a direction in which it is introduced into the case and is filtered. The to-be-filtered fluid is passed through the filter from the inner peripheral side to the outer peripheral side of the filter, thereby washing away the foreign matter adhering to the filter.

The above prior-art methods for cleaning the filter in the filter apparatus have the following problems.

The first method requires a work for opening the case and taking out the filter, each time the filter is to be cleaned, and for setting the cleaned filter in the case and closing the case, and a manual work for removing the foreign matter from the filter. Thus, the number of work procedures for cleaning is large.

In the second method, when the filter is to be cleaned, the to-be-filtered fluid is caused to reversely flow into the case from the outside. This necessitates provision of a conduit for reverse flow in addition to a conduit for normal flow of the fluid, and a switch valve for switching the direction of flow of the to-be-filtered fluid. As a result, the construction of conduits for the flow of the to-be-filtered fluid becomes complex.

The present invention provides a filter apparatus which can easily and exactly perform, with a simple construction, cleaning to remove foreign matter adhering to a filter.

The present invention may provide a filter apparatus that filters a to-be-filtered fluid and removes foreign matter included in the to-be-filtered fluid, comprising: a case; to-be-filtered fluid intake means for causing the to-be-filtered fluid to flow into the case; to-be-filtered fluid discharge means for discharging the to-be-filtered fluid from the case to the outside; a filter, provided within the case, for capturing foreign matter by passing the to-be-filtered fluid through, while the to-be-filtered fluid flows in from the to-be-filtered fluid intake means and flows out from the to-be-filtered fluid discharge means; cleaning means, provided within the case, for pressurizing the to-be-filtered fluid within the case, causing the to-be-filtered fluid to pass through the filter in a direction reverse to a direction in which the to-be-filtered fluid is filtered, and removing the foreign matter adhering to the filter; pressure fluid intake means for making a pressure fluid act on the cleaning means, and causing the cleaning means to pressurize the to-be-filtered fluid within the case; and pressure fluid discharge means for discharging the pressure fluid that is supplied from the pressure fluid intake means to act on the cleaning means.

According to the present invention, the cleaning means is provided within the case. The cleaning means is operated by a pressure fluid to pressurize a to-be-filtered fluid within the case. Thus, the foreign matter adhering to the filter can be removed by the pressurized to-be-filtered fluid.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a cross-sectional view showing a filter apparatus according to a first embodiment of the present invention;
FIG. 2 is a cross-sectional view showing the filter apparatus in a state in which the filter is being cleaned;
FIG. 3 is a cross-sectional view showing a filter apparatus according to a second embodiment of the invention;
FIG. 4 is a cross-sectional view showing a filter apparatus according to a third embodiment of the invention;
FIG. 5 is a cross-sectional view showing the filter apparatus in a state in which the filter is being cleaned;
FIG. 6 is a front view showing a filter apparatus according to a fourth embodiment of the invention;
FIG. 7 is a plan view of the filter apparatus;
FIG. 8 is a bottom view of the filter apparatus;
FIG. 9 is a partial cross-sectional left side view of the filter apparatus shown in FIG. 6;
FIG. 10 is a right side view of the filter apparatus shown in FIG. 6;
FIG. 11 is a vertical cross-sectional view of the filter apparatus;
FIG. 12 is a plan view showing the upper surface of a base block, with the case of the filter apparatus being removed;
FIGS. 13A and 13B are cross-sectional views showing, in different directions, a switch valve chamber formed in the base block;
FIG. 14A is a side view of the switch valve provided in the switch valve chamber;
FIGS. 14B to 14D are cross-sectional views taken along lines XIVB to XIVD in FIG. 14A;
FIG. 15 is a view for explaining switching operation positions of a handle;
FIG. 16A and FIG. 16B are views for explaining the switch operation positions of the switch valve at a time when a to-be-filtered fluid is filtered in a pair of cases;
FIG. 17A and FIG. 17B are views for explaining the switch operation position of the switch valve at a time when a to-be-filtered fluid is filtered in one case and an operation in the other case is stopped;
FIG. 18A and FIG. 18B are views for explaining the switch operation position of the switching valve at a time when a to-be-filtered fluid is filtered in one case and a filter in the other case is cleaned;
FIG. 19 is a cross-sectional view of the filter apparatus, illustrating the flow of a to-be-filtered fluid at a time of filtering the to-be-filtered fluid in a pair of cases;
FIG. 20 is a cross-sectional view of the filter apparatus, illustrating the flow of a to-be-filtered fluid at a time of filtering the to-be-filtered fluid in one case and stopping the operation in the other case; and
FIG. 21 is a cross-sectional view of the filter apparatus, illustrating the flow of a to-be-filtered fluid at a time of filtering the to-be-filtered fluid in one case and cleaning a filter in the other case.

Embodiments of the present invention will now be described.

### (First Embodiment)

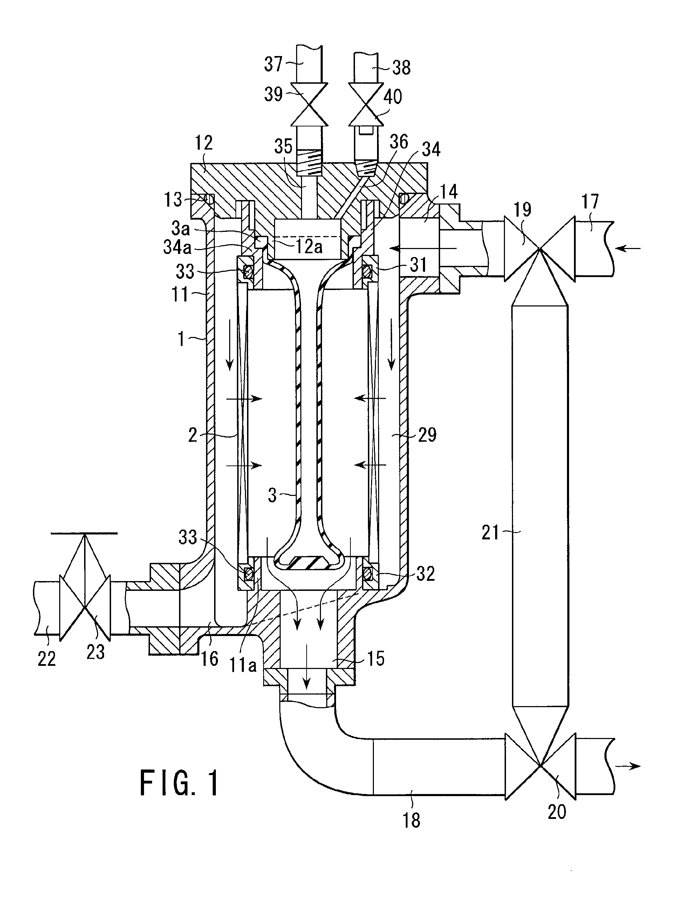

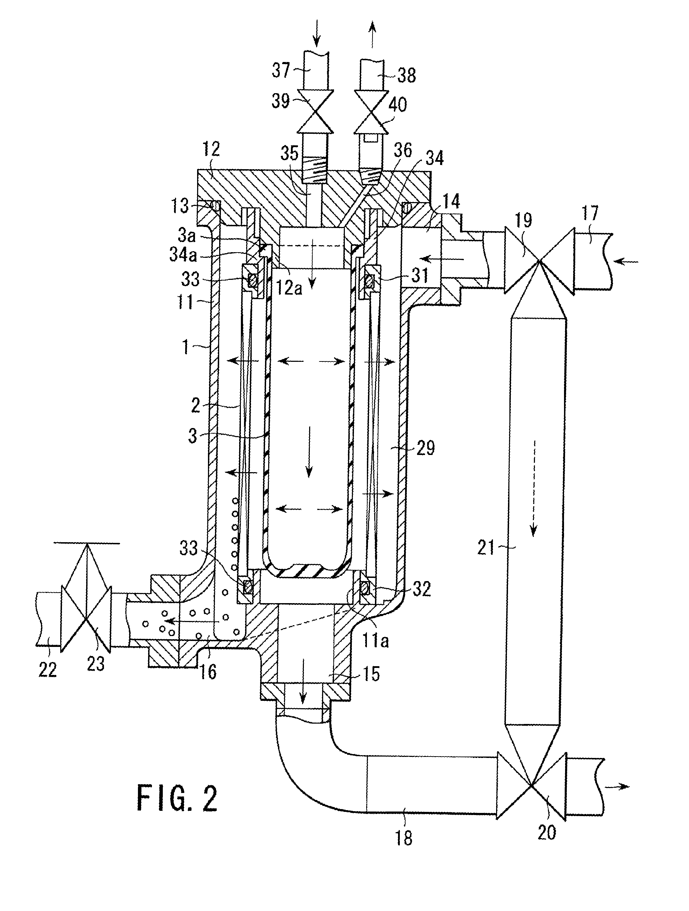

FIG. 1 and FIG. 2 show a first embodiment of the present invention. The first embodiment is directed to a filter apparatus having a cylindrical filter. The filter apparatus is incorporated in a hydraulic circuit and is used to capture foreign matter included in oil, which is a to-be-filtered fluid.

FIG. 1 is a cross-sectional view showing the filter apparatus in a state in which normal filtration is performed. FIG. 2 is a cross-sectional view showing the filter apparatus in a state in which the filter is being cleaned. In FIGS. 1 and 2, reference numeral 1 denotes a case, numeral 2 a filter, and numeral 3 a cleaning member which is a specific example of cleaning means.

The case 1 has a bottomed cylindrical case body 11 and a disc-shaped cover 12. The cover 12 is liquid-tightly secured to an upper open-end portion of the case body 1 via a seal ring 13.

An inlet 14 for a to-be-filtered fluid is formed in an upper-end peripheral wall portion of the case body 11 such that the inlet 14 extends in a direction perpendicular to the axis of the case 1. An outlet 15 for the to-be-filtered fluid, which has been filtered, is formed in a lower-end portion of the case body 11 such that the outlet 15 extends along the axis of the case 1. A drain port 16 is formed in a lower-end peripheral wall portion of the case body 11 such that the drain port 16 extends in a direction perpendicular to the axis of the case 1 and is displaced by 180° relative to the inlet 14.

An inflow conduit 17 is connected to the inlet 14, and an outflow conduit 18 is connected to the outlet 15. The inflow conduit 17 and outflow conduit 18 are connected to a hydraulic circuit (not shown).

The inflow conduit 17 is provided with a first three-way valve 19, and the outflow conduit 18 is provided with a second three-way valve 20. A bypass port of the three-way valve 19 and a bypass port of the three-way valve 20 are connected by a bypass conduit 21.

A drain conduit 22 is connected to the drain port 16. The drain conduit 22 is connected to a drain process apparatus (not shown). The drain conduit 22 is provided with a drain discharge valve 23.

The filter 2 has a cylindrical shape with both ends opened. The filter 2 is formed of, e.g. a wire mesh, porous metal, filter paper, etc. Hold rings 31 and 32 are attached both ends of the filter 2. A seal ring 33 is provided on an inner peripheral portion of each of the hold rings 31 and 32. The filter 2 is disposed within the case 1 such that the center axis of the filter 2 coincides with the center axis of the case 1.

The inner surface of the cover 12 of case 1 is provided with an annular portion 12a. The annular portion 12a is concentric with the center axis of the case 1. A fixing ring 34 is engaged with an outer peripheral part of the annular portion 12a. The hold ring 31 attached to the upper end portion of the filter 2 is liquid-tightly, detachably engaged with an outer peripheral part of the fixing ring 34 via the seal ring 33.

An annular portion 11a, which surrounds the outlet 15 about the center axis thereof, is formed at an inner surface of the lower end portion of the case body 11 so as to be concentric with the case 1. The hold ring 32 attached to the lower end portion of the filter 2 is liquid-tightly, detachably engaged with the annular portion 11a via the seal ring 33.

A space region 29 is defined between the filter 2, which is held in the above-described fashion, and the peripheral wall of the case body 11. The space region 29 surrounds the entire periphery of the filter 2 and communicates with the inlet 14. The lower end of the filter 2 directly faces, and communicates with, the outlet 15.

The cleaning member 3 is formed of an elastic material such as rubber. Thus, the cleaning member 3 expands by taking in a pressure fluid, such as compressed air, and contracts by releasing the pressure fluid. The cleaning member 3 has a bag-like shape with an opening for taking in and releasing the pressure fluid. At the time of expansion, the cleaning member 3 has a cylindrical shape, with one end opened and the other end closed. At the time of expansion, the outside diameter of the cleaning member 3 is less than the inside diameter of the filter 2, and the length of the cleaning member 3 is substantially equal to that of the filter 2. At the time of contraction, the cleaning member 3 takes a sheath shape.

The cleaning member 3 is concentrically disposed within the cylindrical filter 2 such that the open end of the cleaning member 3 is situated upward. The upper-end opening portion of the cleaning member 3 is tightly fitted on a distal end portion of the outer peripheral surface of the annular portion 12a of the cover 12. Thus, the upper-end opening portion of the cleaning member 3 is firmly clamped between the annular portion 12a and the fixing ring 34 engaged with the annular portion 12a.

A rib 3a is formed on an entire peripheral edge portion of the upper-end opening of the cleaning member 3. The fixing ring 34 has a stepped portion 34a that is engaged with an outside part of the rib 3a. Thereby, the cleaning member 3 is prevented from being disengaged from the annular portion 12a.

The cover 12 of case 1 is provided with a compressed-air intake port 35 and a compressed-air discharge port 36, which establish communication between the outside and inside of the cover 12, that is, between the outside and inside of the case 1. The intake port 35 supplies compressed air, which is an example of the pressure fluid, to the cleaning member 3, and the discharge port 36 discharges the compressed air from the cleaning member 3. The intake port 35 and discharge port 36 communicate with a region surrounded by the annular portion 12a on the inside of the cover 12. The region surrounded by the annular portion 12a faces the upper-end opening of the cleaning member 3.

A compressed-air intake conduit 37 is connected to the intake port 35. The intake conduit 37 is connected to a compressed-air supply compressor (not shown). A discharge conduit 38 is connected to the discharge port 36. The discharge conduit 38 is connected to an exhaust fan (not shown). An intake valve 39 is provided on the intake conduit 37, and a discharge valve 40 is provided on the discharge conduit 38.

The operation of the filter apparatus with the above-described structure will now be described.

An operation for filtering oil, which is a to-be-filtered fluid, is first described with reference to FIG. 1. The intake port 39 for compressed air is closed, and no compressed air is supplied to the cleaning member 3. The cleaning member 3 is kept in a contracted state. Accordingly, a large space is defined between the inner surface of the filter 2 and the cleaning member 3.

The first three-way valve 19 is operated to establish communication between the inflow conduit 17 and the inlet 14, and to shut off communication between the inflow conduit 17 and the bypass conduit 21. The second three-way valve 20 is operated to open the outflow conduit 18 and to shut off communication between the bypass conduit 21 and the outlet 15. In addition, the drain discharge valve 23 is closed.

Oil from the hydraulic circuit (not shown) flows in the inflow conduit 17 and enters the inside of the case body 11 from the inlet 14 via the first three-way valve 19. The oil flows into the space region 29 that is defined between the inner peripheral wall of the case body 11 of case 1 and the outer peripheral wall of the cylindrical filter 2. The oil passes through the peripheral wall of the filter 2 from the outside of the filter 2, and enters the space inside the filter 2. When the oil passes through the peripheral wall of the filter 2, the filter 2 captures foreign matter included in the oil. The oil, which has passed through the peripheral wall of the filter 2, flows out of the outlet 15 at the lower end of the case 1. Then, the oil flows through the outflow conduit 18 via the second three-way valve 20 and returns to the hydraulic circuit.

If the amount of captured foreign matter increases, the filter 2 clogs and the filtration performance deteriorates. In such a case, the clogged filter 2 is cleaned to eliminate the clogging.

An operation for cleaning the filter 2 is described with reference to FIG. 2.

The first three-way valve 19 is operated to stop the supply of the oil to the inlet 14 through the inflow conduit 17, and to establish communication between the inflow conduit 17 and the bypass conduit 21. The second three-way valve 20 is operated to stop the outflow of the oil from the outlet 15 and to establish communication with the outflow conduit 18 and the bypass conduit 21.

Thereby, the oil flowing from the hydraulic circuit through the inflow conduit 17 is bypassed to the bypass conduit 21 via the first three-way valve 19. Then, the oil flows from the bypass conduit 21 to the outflow conduit 18 via the second three-way valve 20 and returns to the hydraulic circuit. As a result, the communication of the oil to the case 1 is shut off, and the oil remains within the case 1.

Subsequently, the drain discharge valve 23 is opened, and the compressed-air intake valve 39 is opened. Compressed air is supplied from the intake conduit 37 to the inside of the cleaning member 3 that is contracted in a sheath shape. Once the compressed air is supplied to the cleaning member 3, the cleaning member 3 expands due to the pressure of the compressed air. The compressed air is supplied to the cleaning member 3 at such a flow rate as to be able to quickly expand the cleaning member 3.

By the intake of the compressed air, the cleaning member 3 quickly expands to a maximum cylindrical expansion state. The outside dimensions of the cleaning member 3 are set such that the cleaning member 3, when expanded to a maximum expansion state, does not collide with the filter 2.

If the cleaning member 3 expands and the volume thereof increases, the volume of the space region defined between the inner wall of the filter 2 and the outer surface of the cleaning member 3 quickly decreases. Thereby, most of the oil remaining in this space region passes through the peripheral wall of the filter 2 and moves into the space region 29 defined between the filter 2 and the inner peripheral wall of the case body 11.

If the cleaning member 3 expands instantaneously, the cleaning member 3 quickly pressurizes the oil remaining in the space region inside the filter 2. Hence, the cleaning member 3 applies a great impact upon the oil in the filter 2, and the oil is instantaneously pushed out of the filter 2.

The oil, which has received the impact from the cleaning member 3 and has been pressurized, quickly passes through the peripheral wall of the filter in a direction opposite to the direction in which the oil is filtered. Accordingly, the oil applies an impact upon the foreign matter adhering to the outer peripheral surface or inside of the peripheral wall of the filter 2, thus strongly striking the foreign matter off the filter 2.

At the time of contraction, the cleaning member 3 has a sheath shape. At the time of expansion, the cleaning member 3 dilates concentrically with the axis of the filter 2. Thus, the cleaning member 3 can uniformly pressurize the oil remaining in the filter 2 over the entire periphery of the filter 2. As a result, since the oil can be passed through the peripheral wall of the filter 2 uniformly over the entire periphery of the filter 2, the foreign matter can be removed uniformly over the entire periphery of the filter 2.

The oil, which has been passed through the filter 2, flows along with the foreign matter to the drain conduit 22 from the drain port 16 provided at the lower end of the case 1. Then, the oil including the foreign matter flows through the drain discharge valve 23 and is processed by the drain process apparatus (not shown).

As has been described above, when the cleaning member 3 expands, the oil is pressurized, and the pressurized oil applies an impact upon the filter 2. Therefore, foreign matter adhering to the filter 2 can effectively be removed instantaneously and clogging can be eliminated. Furthermore, since the oil, which is a to-be-filtered fluid, is instantaneously pressurized to eliminate clogging of the filter 2, the amount of drain, which occurs at the time of removing the foreign matter from the filter 2, is advantageously small.

If the cleaning of the filter 2 is completed, the intake valve 39 is closed and the discharge valve 40 is opened. Thereby, the supply of compressed air from the intake conduit 37 to the cleaning member 3 is shut off, and the compressed air remaining in the cleaning member 3 is discharged to the discharge conduit 38 via the discharge port 36.

Subsequently, the drain discharge valve 23 is closed. The first and second three-way valves 19 and 20 are operated to establish communication between the inflow conduit 17 and the inlet 14 as well as communication between the outflow conduit 18 and the outlet 15. Thereby, the oil in the hydraulic circuit enters the case 1, foreign matter included in the oil is removed by the filter 2 while the oil flows in the case 1, and the filtered oil flows out. Since the compressed air is discharged from the cleaning member 3, the cleaning member 3 contracts due to the pressure of oil entering the case 1 and the contractive force thereof. When the cleaning member 3 has contracted to its minimum contraction state, the discharge valve 40 is closed.

As has been described above, in this filter apparatus, the clogging of the filter 2 can be quickly and effectively eliminated. In addition, the construction is simple since the means for eliminating the clogging of the filter 2 is only to dispose the cleaning member 3 formed of an expandible/contractible bag within the case 1. The operation for eliminating the clogging of the peripheral wall of the filter 2 involves simply feeding a pressure fluid, e.g. compressed air, to the cleaning member 3 and expanding the cleaning member 3. Furthermore, since the cleaning member 3 is in the contracted state when the oil, which is the to-be-filtered fluid, is filtered, the cleaning member 3 does not hinder the flow of the to-be-filtered fluid that is filtered by the filter 2.

In order to eliminate clogging of the peripheral wall of the filter 2, a pressure fluid is not directly introduced into the case 1. Instead, the cleaning member 3 is expanded using the pressure fluid. Therefore, such a state does not occur that the pressure fluid remains in the case 1 and mixes with the to-be-filtered fluid. It is thus possible to prevent the pressure fluid from mixing with the to-be-filtered fluid and deteriorating the to-be-filtered fluid. In particular, if compressed air mixes in oil used in the hydraulic circuit, this may lead to a malfunction of a device actuated by the hydraulic circuit. To prevent this problem, the air has to be removed. In this embodiment, however, compressed air does not mix in the oil, and it is not necessary to remove the air.

If compressed air is used as a pressure fluid for expanding the cleaning member 3, the cost of the pressure fluid itself is low and the equipment for feeding the pressure fluid is simple and inexpensive.

The amount of drain at the time of cleaning is substantially equal to the volume of the expanded bag-type cleaning member 3 and is small. Therefore, the clogging of the filter 2 can be effectively eliminated with a small amount of drain.

Besides, the case 1 is provided with the drain port 16, and the drain port 16 is connected to the drain conduit 22 having the drain discharge valve 23. Therefore, the foreign matter, which has been removed from the filter 2, can easily be brought to the outside of the case 1.

The filter 2 is formed in the cylindrical shape, the bag-like cleaning member 3 is provided within the filter 2, and the cleaning member 3 is expanded by the pressure fluid, thereby to eliminate clogging of the filter 2. Thus, when the cleaning member 3 is expanded and the to-be-filtered fluid applies pressure to the inner peripheral surface of the filter 2, the pressure can be applied effectively and uniformly to the entire inner peripheral surface of the filter 2.

In the first embodiment, the cleaning member 3 formed of a cylindrical bag is used as the cleaning means, and the shape of the cleaning means is suited to eliminate clogging of the cylindrical filter 2. However, the cleaning means is not limited to a cleaning member formed of a cylindrical bag. Alternatively, the cleaning member may be formed of a bellows-type bag.

### (Second Embodiment)

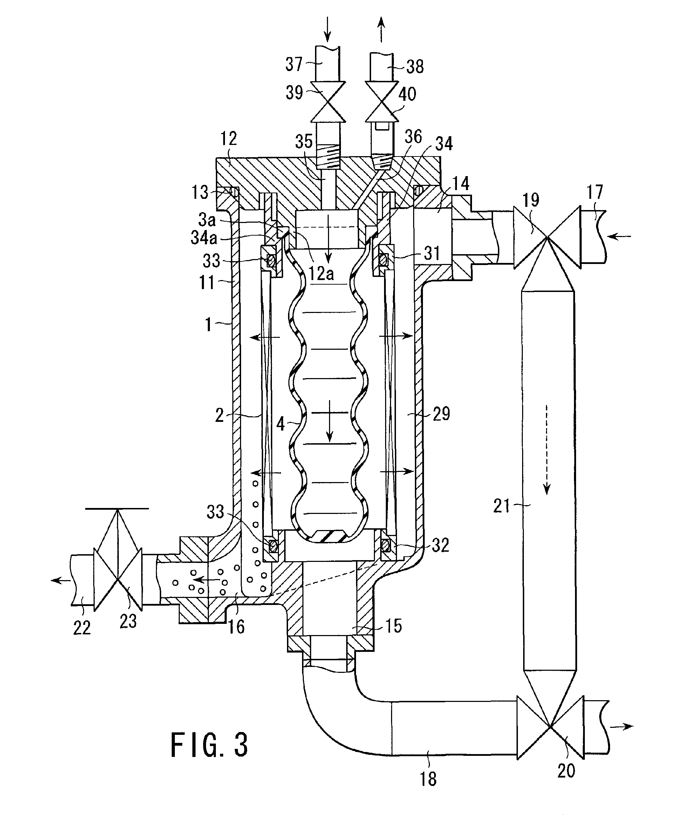

FIG. 3 is a cross-sectional view showing a filter apparatus according to a second embodiment of the invention, wherein the cleaning member 3 is formed of a bellows-type bag. The parts common to those in FIG. 2 are denoted by like reference numerals. In FIG. 3, reference numeral 4 denotes cleaning means formed of a bellows-type bag. The cleaning means 4, like the cleaning member 3, is provided within the case 1.

In the above-described first and second embodiments, the cleaning means is designed such that the cleaning means, when expanded, does not come in contact with the inner peripheral surface of the filter. However, the cleaning means may be designed so as to contact the inner peripheral surface of the filter when it is expanded.

In the case where a to-be-filtered fluid is passed from the outer peripheral surface to the inner peripheral surface of the filter, as in the first and second embodiments, the cleaning means is provided on the inner peripheral side of the filter, that is, on the downstream side of the flow of the to-be-filtered fluid relative to the peripheral wall of the filter. However, in a case where a to-be-filtered fluid is passed from the inner peripheral surface to the outer peripheral surface of the filter, the cleaning means is provided on the outer peripheral side of the filter, that is, on the downstream side of the flow of the to-be-filtered fluid relative to the peripheral wall of the filter.

### (Third Embodiment)

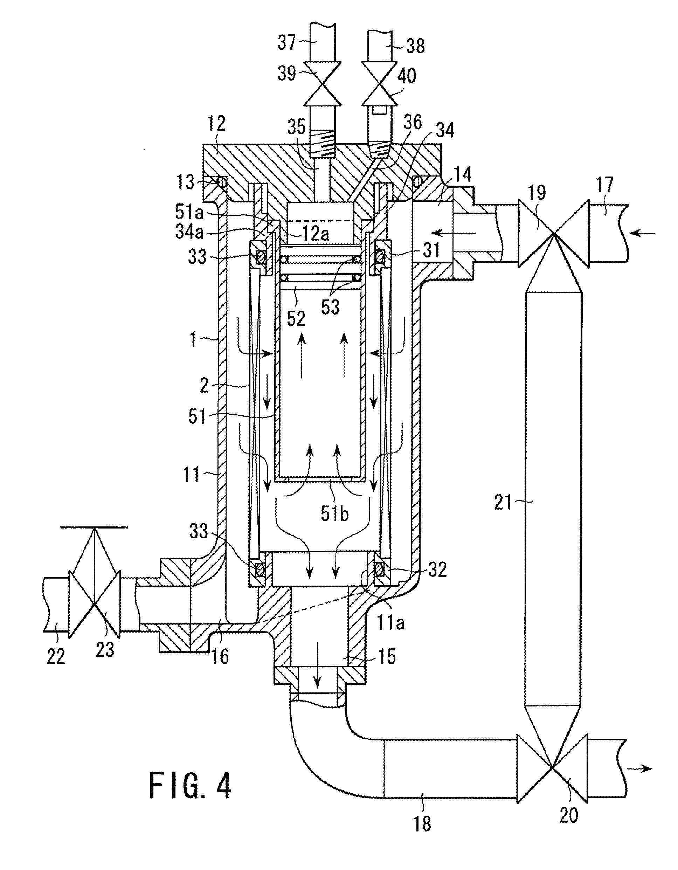

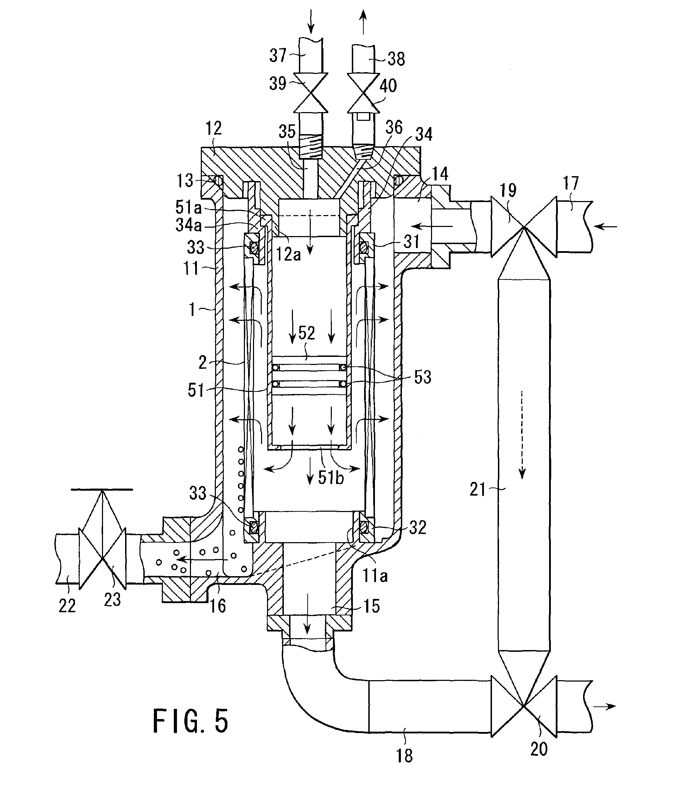

A third embodiment of the invention will now be described with reference to FIGS. 4 and 5. FIG. 4 is a cross-sectional view showing a filter apparatus in a state in which filtration is normally performed. FIG. 5 is a cross-sectional view showing the filter apparatus in a state in which the filter is being cleaned. In FIGS. 4 and 5, the parts common to those in FIGS. 1 and 2 are denoted by like reference numerals.

In this embodiment, the cleaning means comprises a combination of a guide member 51 and a movable member 52. The guide member 51 is formed of metal and has a cylindrical shape with both ends opened. The diameter of the guide member 51 is less than the diameter of the filter 2, the length of the guide member 51 is less than the length of the filter 2.

The guide member 51 is disposed within the filter 2 so as to be concentric with the filter 2. An upper-end opening portion of the guide member 51 is engaged with an outer peripheral part of the annular portion 12a of the cover 12. The upper-end opening portion of the guide member 51 is held, from the outer peripheral side, by the fixing ring 34 engaged with the annular portion 12a and is thus fixed. A rib 51a is formed on an entire peripheral edge portion of the upper-end opening of the guide member 51. The rib 51a is irremovably clamped and fixed by the annular portion 12a and the stepped portion 34a of fixing ring 34.

The guide member 51 has a lower-end opening portion 51b that is open to the inside space of the filter 2. The space for the flow of to-be-filtered fluid is defined between the filter 2 and guide member 51.

The movable member 52 is formed of metal in a piston-like shape. The movable member 52 has a diameter that permits slidable insertion of the movable member 52 in the guide member 51. Seal rings 53 are fitted in outer peripheral portions of the movable member 52. The movable member 52 is axially movably inserted in the guide member 51.

Thereby, the inside of the guide member 51 is partitioned into an upper part and a lower part by the movable member 52. The seal rings 53 of the movable member 52 contact the inner peripheral surface of the guide member 51, thus effecting liquid-tight sealing between the upper part and lower part of the guide member 51 which are partitioned by the movable member 52. The weight of the movable member 52 is set such that the movable member 52 can be lifted within the guide member 51 by the pressure of the filtered fluid within the case 1.

The intake port 35 and discharge port 36 for compressed air communicate with the upper part of the guide member 51 that is partitioned by the movable member 52. As will be described later, the intake port 35 and discharge port 36 permit compressed air to flow in, and flow out of, the upper part of the guide member 51.

When oil, which is a to-be-filtered fluid, is filtered, the oil is supplied into the case 1 in the state in which no compressed air is introduced into the upper part of the guide member 51, which is partitioned by the movable member 52, as shown in FIG. 4. The oil supplied into the case 1 passes through the peripheral wall of the filter 2 from the outer peripheral side to the inner peripheral side. Thus, the filter 2 captures foreign matter included in the oil.

The oil flowing into the inner peripheral side of the filter 2 enters the lower-end opening portion 51b of guide member 51 and applies pressure to the lower surface of the movable member 52 provided within the guide member 51. The movable member 52 is pushed by the oil and ascends within the guide member 51. The movable member 52 stops when it abuts on the lower end of the annular portion 12a of cover 12. In other words, the oil is filled in most part of the inside of the guide member 51 and raises the movable member 52 to an upper limit. The position where the movable member 52 is pushed up by the oil to an upper limit and stopped is referred to as a standby position.

When the filter 2 is cleaned, oil coming from the hydraulic circuit through the inflow conduit 17 is introduced to the bypass conduit 21 and returned to the hydraulic circuit, as shown in FIG. 5. Thus, the flow of oil to the case 1 is shut off, and the oil remains in the case 1. At the time of cleaning, the drain discharge valve 23 is opened.

The compressed air intake valve 39 is opened to permit communication between the intake conduit 37 and the case 1. Compressed air supplied from the intake conduit 37 flows through the intake valve 39 and intake port 35 and enters the inside space of the annular portion 12a formed on the inner surface of the cover 12. The movable member 52 that is elevated within the guide member 51 is in contact with the lower end of the annular portion 12a. The compressed air applies pressure to the upper surface of the movable member 52 and pushes down the movable member 52.

Pushed by the compressed air, the movable member 52 departs from the lower end of the annular portion 12a and quickly descends within the guide member 51. If the movable member 52 quickly descends within the guide member 51, the movable member 52 pressurizes the oil in the guide member 51 and quickly pushes out the oil from the lower-end opening portion 51b of guide member 51 into the inside region of the filter 2.

With the descending of the movable member 52, the upper-side space of the movable member 52 within the guide member 51 enlarges and the amount of compressed air coming in this space increases. Thereby, the movable member 52 is further pushed down. Inversely, with the descending of the movable member 52, the lower-side space of the movable member 52 within the guide member 51 contracts and the oil in this space is pushed out of the opening portion 51b of guide member 51.

If the oil within the guide member 51 is quickly pushed out into the inside region of the filter 2, the oil, which is present on the inner peripheral side of the filter 2, is pressurized by the oil pushed out of the guide member 51 and rapidly moves toward the outer peripheral side of the filter 2. Thereby, the oil passes through the peripheral wall of the filter 2 and is pushed out to the outer peripheral side of the filter 2. When the oil rapidly moves and passes through the peripheral wall of the filter 2, the oil applies an impact upon the foreign matter adhering to the outer peripheral surface or inside of the peripheral wall of the filter 2, thus strongly striking the foreign matter off the filter 2.

At this time, the oil pushed out of the guide member 51 can uniformly apply pressure to the oil in the filter 2 over the entire periphery of the filter 2. As a result, the oil can be quickly and uniformly passed through the entire peripheral wall of the filter 2, and the foreign matter can be eliminated.

The oil, which has been passed through the filter 2, flows along with the foreign matter to the drain port 16 provided at the lower end of the case 1. Then, the oil including the foreign matter flows from the drain port 16 to the drain conduit 22 via the drain discharge valve 23 and is processed by the drain process apparatus (not shown).

The movable member 52 descends to the lower part of the guide member 51 and stops at a position where the pressure of the compressed air and the pressure of the oil in the filter 2 are balanced. This position is referred to as a cleaning position, since the movable member 52 descends while cleaning the filter and stops at this position. A stopper (not shown) may be detachably provided at the lower part of the guide member 51, thereby to restrict the descent position, i.e. the cleaning position, of the movable member 52.

As has been described above, the movable member 52 is moved to pressurize the oil and cause it flow in a direction opposite to the direction in which the oil is filtered. Accordingly, the foreign matter adhering to the filter 2 can instantaneously and effectively washed away and the clogging of the filter 2 can be eliminated. In addition, since the oil, which is the to-be-filtered fluid, is instantaneously moved to eliminate the clogging of the peripheral wall of the filter 2, the amount of drain occurring at the time of cleaning is small.

As has been described above, in this filter apparatus, the clogging of the filter 2 can be quickly and effectively eliminated. In addition, the construction is simple since the cleaning means for eliminating the clogging of the filter 2 is only to provide the guide member 51 in the case 1 and the movable member 52 movable within the guide member 51. The operation for eliminating the clogging of the peripheral wall of the filter 2 involves simply feeding a pressure fluid, e.g. compressed air, to the guide member 51 and thereby moving the movable member 52.

In order to eliminate clogging of the filter 2, a pressure fluid is not directly introduced into the case 1. Instead, the movable member 52 is moved using the pressure fluid. It is thus possible to prevent the pressure fluid from mixing with the to-be-filtered fluid in the case 1 and deteriorating the to-be-filtered fluid due to mixing of the pressure fluid.

If compressed air is used as the pressure fluid for moving the movable member 52, the cost of the pressure fluid itself is low and the equipment for feeding the pressure fluid is simple and inexpensive.

### (Fourth Embodiment)

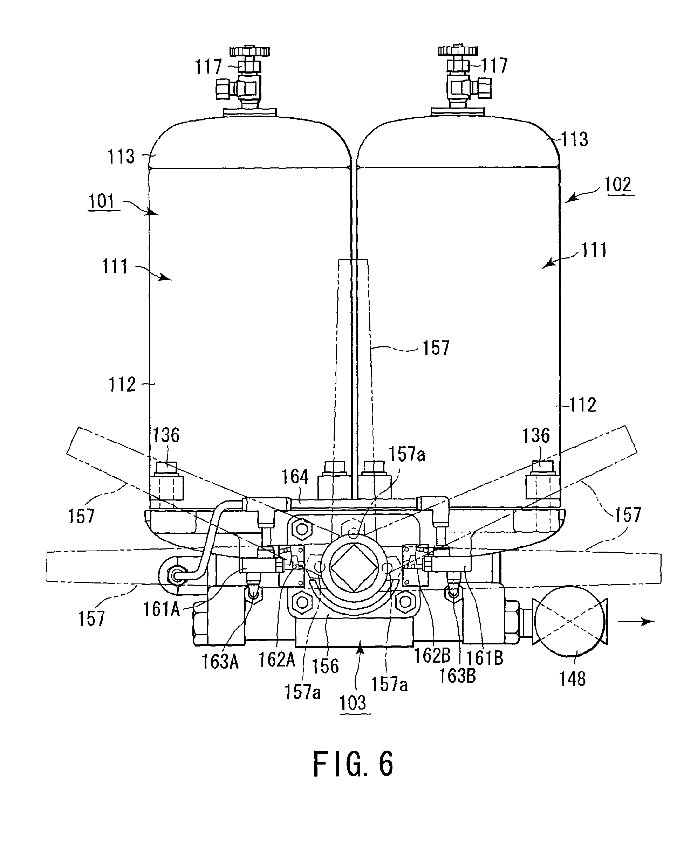

A fourth embodiment of the invention will now be described with reference to FIGS. 6 to 21.

A filter apparatus according to this embodiment comprises a plurality of units each including a case, a filter and cleaning means in combination; to-be-filtered fluid intake means for feeding a to-be-filtered fluid into the case of each unit; to-be-filtered fluid discharge means for discharging the to-be-filtered fluid in the inside of the case to the outside; a pressure fluid intake means, provided in the case of each unit, for feeding a pressure fluid to the cleaning means; and pressure fluid discharge means, provided in the case of each unit, for releasing the pressure fluid acting in the cleaning means. The combination of the guide member and movable member according to the above-described third embodiment is used as the cleaning means. In this fourth embodiment, two units are provided.

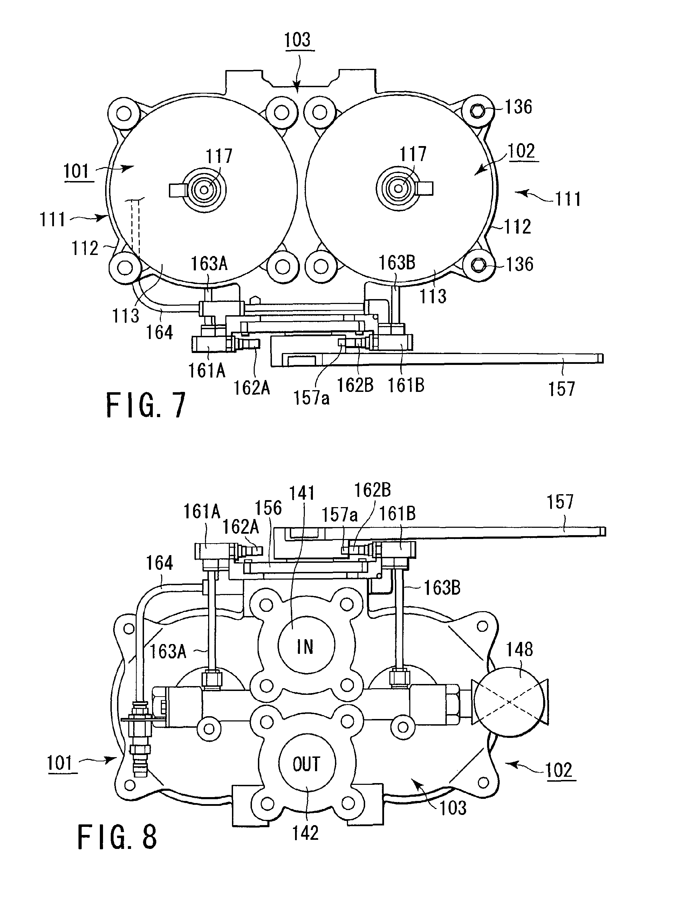

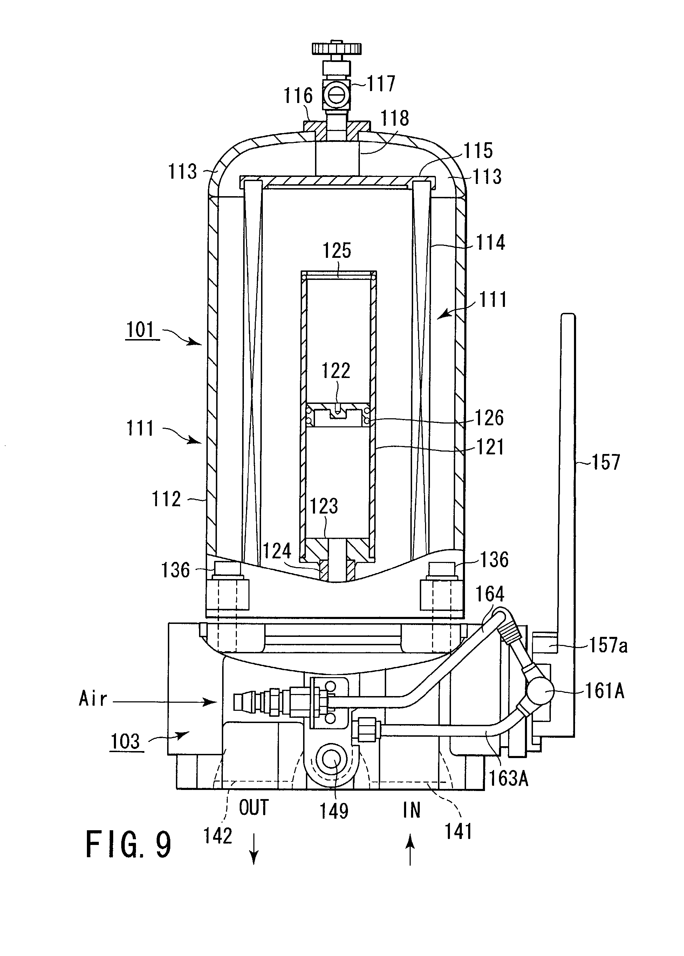

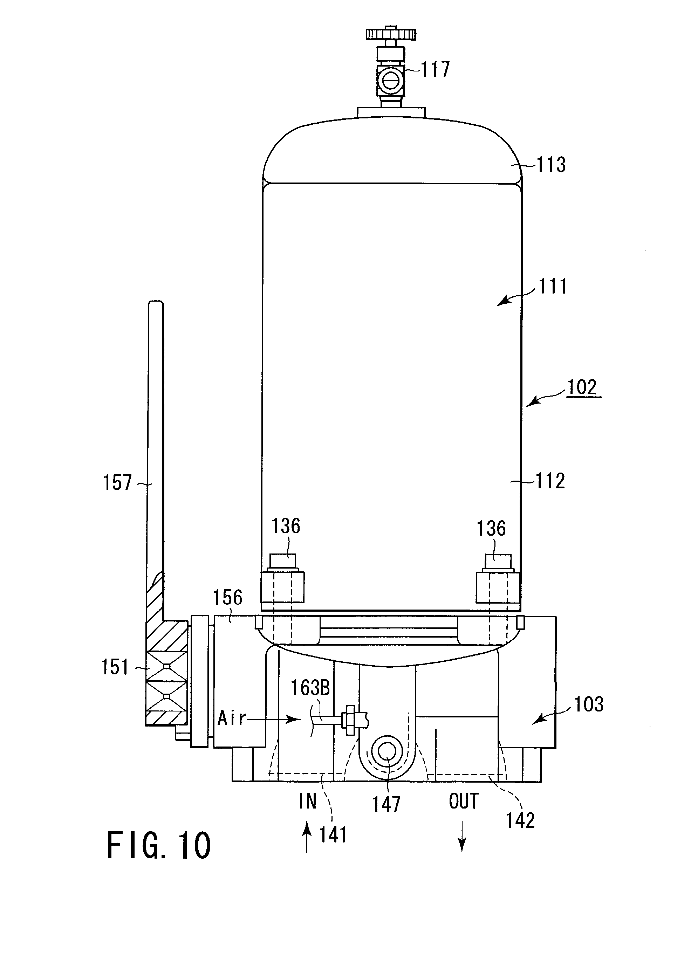

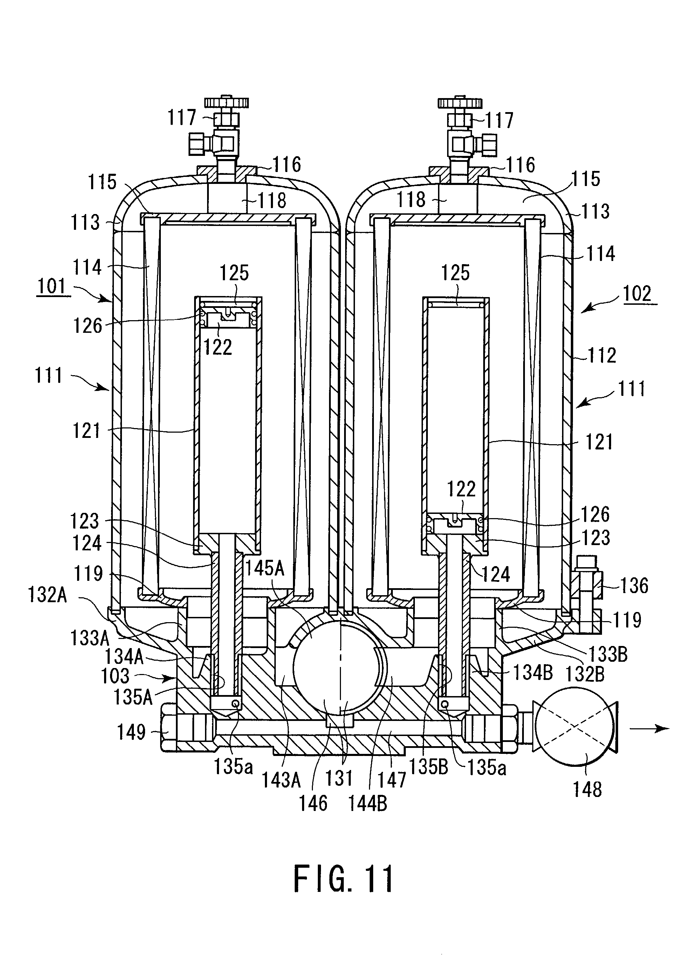

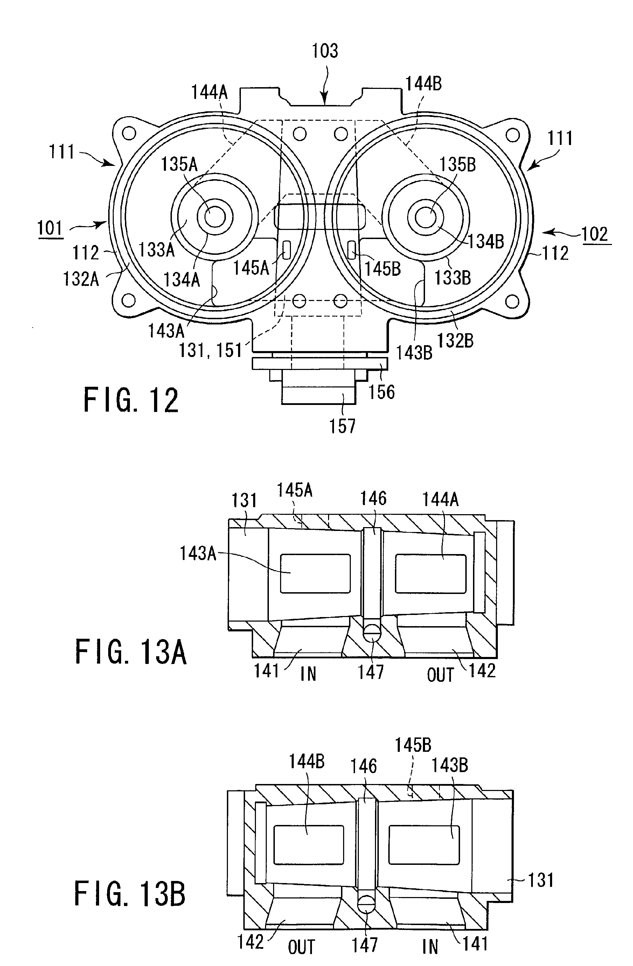

FIG. 6 is a front view showing the filter apparatus according to the fourth embodiment. FIG. 7 is a plan view of the filter apparatus. FIG. 8 is a bottom view of the filter apparatus. FIG. 9 is a left side view of the filter apparatus. FIG. 10 is a right side view of the filter apparatus. FIG. 11 is a vertical cross-sectional view of the filter apparatus, and FIG. 12 is a plan view showing a base block, with the case of the filter apparatus being removed.

In FIG. 6, reference numeral 101 denotes a left unit located on the left side, and 102 denotes a right unit located on the right side. The left unit 101 and right unit 102 are juxtaposed. These units are mounted on a base block 103 provided on the lower side.

The left unit 101 and right unit 102 have substantially the same structure. In FIG. 6, reference numeral 111 denotes a case. The case 111 comprises an upright cylindrical case body 112 having both ends opened, and a cover 113 covering the open upper end of the case body 112.

As is shown in FIG. 11, a filter 114 is disposed within the case 111 such that the axis of the filter 114 coincides with the axis of the case 111. The filter 114 has a cylindrical shape with upper and lower ends opened. An end cap 115 is detachably attached to the upper end of the filter 114, whereby the upper end of the filter 114 is closed. An end cap 119 is detachably attached to the lower end of the filter 114. A hole for passing a to-be-filtered fluid is formed in a central part of the end cap 119.

The cover 113 has an exhaust tap 116 and an air release valve 117. The cover 113 supports the end cap 115 via a support member 118. When air is accumulated in the case 111, the air release valve 117 exhausts the air to the outside.

A cylinder 121 serving as a guide member, which is a part of the cleaning means, is disposed within the filter 114 in an upright position such that the axis of the cylinder 121 coincides with the axis of the case 111. A piston 122 serving as a movable member, which is a part of the cleaning means, is vertically movably disposed within the cylinder 121.

An upper end of the cylinder 121 is opened, and an end ring 123 is fitted in a lower end of the cylinder 121. The end ring 123 is attached to a cylinder support pipe 124 that is disposed upright under the cylinder 121. A descent position of the piston 122, which descends due to its own weight, is restricted by the end ring 123. An ascent position of the piston 122 is restricted by a ring 125 provided at the upper end of the cylinder 121. A seal ring 126 for maintaining fluid-tight sealing between an outer periphery of the piston 122 and an inner periphery of the cylinder 121 is attached to the outer periphery of the piston 122. As will be described later, the ascent limit position of the piston 122 is a cleaning position, and the descent limit position is a standby position.

A switch valve chamber 131, which forms a part of switching means and extends in a front-and-rear direction, is horizontally formed at a central part in a right-and-left direction of the base block 103. The switch valve chamber 131 is a hole with a circular cross section for circumferentially rotatably receiving a switch valve 151 that forms a part of the switching means. This hole is tapered in the axial direction.

A front end of the switch valve chamber is open to the front face of the base block 103. A left-hand part and a right-hand part of the base block 103 form portions for supporting the left unit 101 and right unit 102. Specifically, as shown in FIGS. 11 and 12, dish-shaped case support portions 132A and 132B and cylindrical filter support portions 133A and 133B, which are coaxially formed within the case support portions 132A and 132B, are formed on the left-hand part and right-hand part of the base block 103. These portions are open to the top face of the base block 103.

Cylinder support portions 134A and 134B are formed at bottom parts of the filter support portions 133A and 133B. Support holes 135A and 135B are formed in the cylinder support portions 134A and 134B. The support holes 135A and 135B are formed vertically downward and extend coaxial with the filter support portions 133A and 133B.

The case support portions 132A and 132B engage and support lower end portions of the case bodies 112 of the left unit 101 and right unit 102. The case support portions 132A and 132B and the case bodies 112 are fixed by means of bolts 136. The filter support portions 133A and 133B engage and support the end caps 119 provided at the lower end portions of the respective filters 114 of the left unit 101 and right unit 102. Lower parts of the cylinder support pipes 124 of the left unit 101 and right unit 102 are tightly fitted and supported in the support holes 135A and 135B of the cylinder support portions 134A and 134B.

The base block 103 is provided with to-be-filtered fluid intake means for feeding a to-be-filtered fluid into the case 111 of each unit 101, 102, and to-be-filtered fluid discharge means for discharging the to-be-filtered fluid from the case 111 to the outside. FIGS. 13A and 13B show the switch valve chamber 131. That is, FIGS. 13A and 13B are cross-sectional views taken along a diametrical center line of the switch valve chamber 131 shown in FIG. 11, and show left-hand and right-hand cross-sectional structures as viewed from the diametrical center of the switch valve chamber 131.

A lower side of the switch valve chamber 131 has an inlet 141 opening to a lower surface of the front part of the base block 103, and an outlet 142 opening to a lower surface of the rear part of the base block 103. The inlet 141 and outlet 142 communicate with a region below the switch valve chamber 131. The inlet 141 and outlet 142 are connected to a hydraulic circuit (not shown) for circulating, e.g. oil that is a to-be-filtered fluid.

A left part of the switch valve chamber 131 includes an inlet port 143A and an outlet port 144A. The inlet port 143A is located at the front part of the base block 103 and communicates with the inside of the case support portion 132A, that is, the inside of the case 111 of the left unit 101. The outlet port 144A is located at the rear part of the base block 103 and communicates with the inside of the filter support portion 133A, that is, the inside of the filter 114 of the left unit 101. The inlet port 143A and outlet port 144A communicate with the left side portion of the switch valve chamber 131.

A right part of the switch valve chamber 131 includes an inlet port 143B and an outlet port 144B. The inlet port 143B is located at the front part of the base block 103 and communicates with the inside of the case support portion 132B, that is, the inside of the case 111 of the right unit 102. The outlet port 144B is located at the rear part of the base block 103 and communicates with the inside of the filter support portion 133B, that is, the inside of the filter 114 of the right unit 102. The inlet port 143B and outlet port 144B communicate with the right side portion of the switch valve chamber 131.

A left part of the upper portion of the switch valve chamber 131 has an auxiliary inlet port 145A communicating with the inside of the case support portion 132A, that is, the inside of the case 111 of the left unit 101. A right part of the upper portion of the switch valve chamber 131 has an auxiliary inlet port 145B communicating with the inside of the case support portion 132B, that is, the inside of the case 111 of the right unit 102.

A central portion in the front-and-rear direction of the inside part of the switch valve chamber 131 is provided with a drain discharge groove 146 extending along the entire circumference of the central portion. As is shown in FIG. 11, a drain discharge hole 147 extending in the right-and-left direction is formed at a central part in the front-and-rear direction of the base block 103 under the switch valve chamber 131. The drain discharge hole 147 is connected to the drain discharge groove 146 just below the switch valve chamber 131.

Both ends of the drain discharge hole 147 are opened. On end of the drain discharge hole 147 is provided with a drain discharge valve 148, which is connected to a drain process apparatus (not shown). The other end of the drain discharge hole 147 is closed by a drain cap 149.

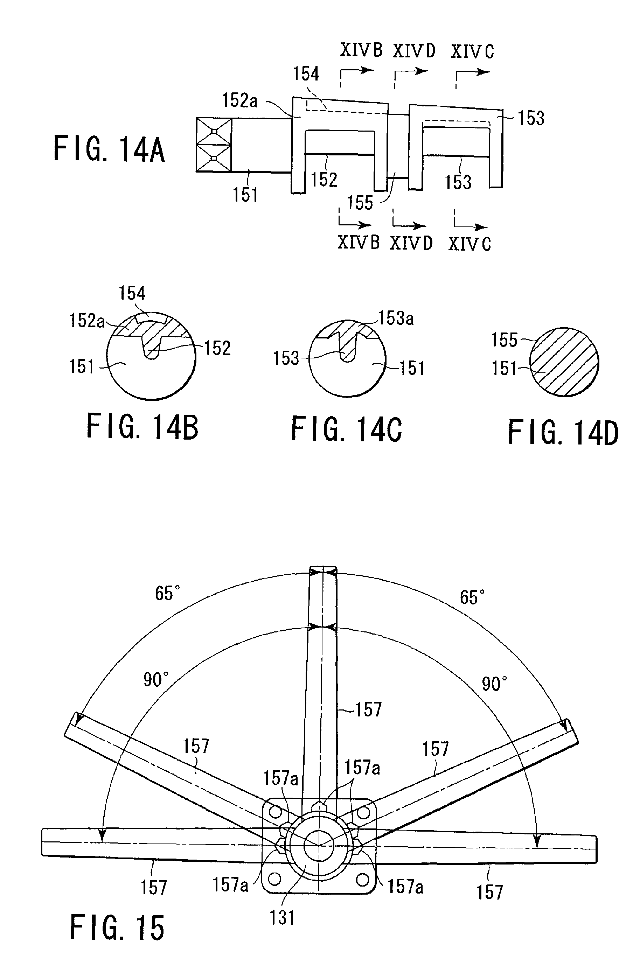

The switch valve 151 is rotatably disposed within the switch valve chamber 131. FIGS. 14A to 14D show the switch valve 151. FIG. 14A is a side view, FIG. 14B is a cross-sectional view taken along line XIVB-XIVB in FIG. 14A, FIG. 14C is a cross-sectional view taken along line XIVC-XIVC in FIG. 14A, and FIG. 14D is a cross-sectional view taken along line XIVD-XIVD in FIG. 14A.

The switch valve 151 has a tapered shape corresponding to the switch valve chamber 131. The switch valve 151 comprises a valve portion inserted in the switch valve chamber 131 and a shaft portion projecting from the switch valve chamber 131. The portion inserted in the switch valve chamber 131 is a shaft with a circular cross section, which has an outside diameter corresponding to an inside diameter of the switch valve chamber 131 and is rotatable within the switch valve chamber 131 about the center axis of the switch valve chamber 131.

The switch valve 151 comprises a front part 152 with a front closing portion 152a, and a rear part 153 with a rear closing portion 153a, which are coaxially arranged. The front closing portion 152a and the rear closing portion 153a have arcuate shapes with the same phase, each having a center of curvature corresponding to the center axis of the switch valve 151.

The front closing portion 152a is provided at a position corresponding to the front part of the switch valve chamber 131. In accordance with the rotation of the switch valve 151, the front closing portion 152a slides in contact with the inner peripheral surface of the switch valve chamber 131 and selectively closes and opens the inlet 141, inlet port 143A, 143B, and auxiliary inlet port 145A, 145B, which are open at the front part of the switch valve chamber 131.

To be more specific, as shown in FIG. 14B, the front closing portion 152a has a fan shape so as to selectively close the openings of the inlet 141, inlet port 143A, 143B, and auxiliary inlet port 145A, 145B. The front part 152 of the switch valve 151, which excludes the front closing portion 152a, is opened. The reason is that in the switch valve chamber 131, the locations other than the location closed by the front closing portion 152a are let to communicate with each other.

The rear closing portion 153a is provided at a position corresponding to the rear part of the switch valve chamber 131. In accordance with the rotation of the switch valve 151, the rear closing portion 153a slides in contact with the inner peripheral surface of the switch valve chamber 131 and selectively closes and opens the outlet 142 and outlet port 144A, 144B, which are open to the inner peripheral surface of the rear part of the switch valve chamber 131. To be more specific, as shown in FIG. 14C, the rear closing portion 153a has a fan shape so as to selectively close the openings of the outlet 142 and outlet port 144A, 144B. The rear part of the switch valve 151, which excludes the rear closing portion 153a, is opened. The reason is that in the switch valve chamber 131, the locations other than the location closed by the rear closing portion 153a are let to communicate with each other.

A drain discharge recess portion 154, which extends from the front closing portion 152a to a central portion in the length direction of the switch valve 151, is formed at a central peripheral portion of the front closing portion 152a. The drain discharge recess portion 154 functions to receive drain flowing out of the inlet port 143A, 143B when the filter 114 is cleaned.

A central portion in the length direction of the switch valve 151 is provided with a drain discharge groove 155 that extends over the entire circumference of the central portion of the switch valve 151. The groove 155 is continuous with the drain discharge recess portion 154. The drain discharge groove 155 faces the drain discharge groove 146 of the switch valve chamber 131, and both grooves extend around the entire circumference of the switch valve 151 and define a drain discharge conduit communicating with the drain discharge hole 147.

The front part 152 and rear part 153 of the switch valve 151 are divided in the length direction of the switch valve 151 by the drain discharge groove 155. Thereby, the front part of the switch valve chamber 131 is partitioned by the front part 152 of the switch valve 151, and the rear part of the switch valve chamber 131 is partitioned by the rear part 153 of the switch valve 151. Fluid flowing in the front part 152 does not leak to the rear part 153, nor does fluid flowing the rear part 153 leak to the front part 152.

As is shown in FIG. 12, a hold cover 156 is attached to the front-end opening portion of the switch valve chamber 131 at the front surface of the base block 103. The hold cover 156 closes the front-end opening portion of the switch valve chamber 131 and holds the valve portion of the switch valve 151 from the outside. The shaft portion projecting from the switch valve chamber 131 is rotatably inserted in and supported by the hold cover 156.

A proximal end portion of a handle 157, which constitutes a switching mechanism, is fixed to the front end portion of the shaft of the switch valve 151, which projects from the hold cover 156. The handle 157 is disposed in a direction perpendicular to the axis of the switch valve 151. When the operator manually rotates the handle 157, the front closing portion 152 and rear closing portion 153 can be moved in the circumferential direction about the axis of the switch valve 151. Specifically, the switch valve 151 is rotated and the closing portions 152 and 153 are shifted to the region of the left unit 101 and the region of the right unit 102. Thereby, the holes communicating with the switch valve chamber 131 are opened and closed to effect a switching operation between the use, stop and cleaning of each unit 101, 102.

As will be described later, when the handle 157 is vertically positioned, the left and right units 101 and 102 perform filtration operations. When the handle 157 is turned horizontal to the right side in the Figures, the right unit 102 performs a cleaning operation. When the handle 157 is turned horizontal to the left side in the Figures, the left unit 101 performs a cleaning operation. A suitable locking mechanism (not shown) is provided for stopping the handle 157 when the handle 157 is rotated to respective switching positions (to be described later), and holding the switch valve 151 at the associated position.

As is shown in FIGS. 6 to 8, a cam 157a, which is projecting, is provided on a proximal end portion of the handle 157. The cam 157a rotates along with the handle 157 as one piece, and operates switches 162A and 162B. If the switch 162A, 162B is operated, an air valve 161A, 161B (to be described later) for controlling supply of compressed air for cleaning is opened.

The base block 103 is provided with pressure fluid intake means and pressure fluid discharge means. The pressure fluid intake means supplies compressed air as a pressure fluid to the cylinder 121, which is the cleaning means provided in each of the two units 101 and 102, thus causing the compressed air to act on the piston 122. The pressure fluid discharge means discharges the compressed air from the cylinder 121, which is provided in each of the two units 101 and 102, thus releasing the action of the compressed air on the piston 122.

Specifically, as shown in FIG. 11, in the base block 103, a hole 135a opening at the front surface of the base block 103 is formed at a lower end portion of each of the support holes 135A and 135B. The hole 135a communicates with a hole (not shown) of the support pipe 124A, 124B of each unit 101, 102, which is inserted in the support hole 135A, 135B.

Air pipes 163A and 163B arranged on the front side of the base block 103 are connected to the holes 135a, respectively. The air pipes 163A and 163B are connected to air valves 161A and 161B arranged on the front side of the base block 103. An electromagnetic valve, for instance, is used as the air valve 161A, 161B. The air valves 161A and 161B are provided with drive switches 162A and 162B.

The air valve 161A, 161B is normally closed. When the switch 162A, 162B is turned on, the air valve 161A, 161B is opened. When the handle 157 is turned to the horizontal position to perform the cleaning (reverse washing) of the left unit 101 and right unit 102, the switch 162A, 162B is pushed by the cam 157a of handle 157 and operated to open the air valve 161A, 161B.

The air valves 161A and 161B are commonly connected to an air conduit 164. The air conduit 164 is arranged on the periphery of the base block 103 and supported by the base block 103. The air conduit 164 is connected to a compressor (not shown) that supplies, e.g. compressed air as a pressure fluid.

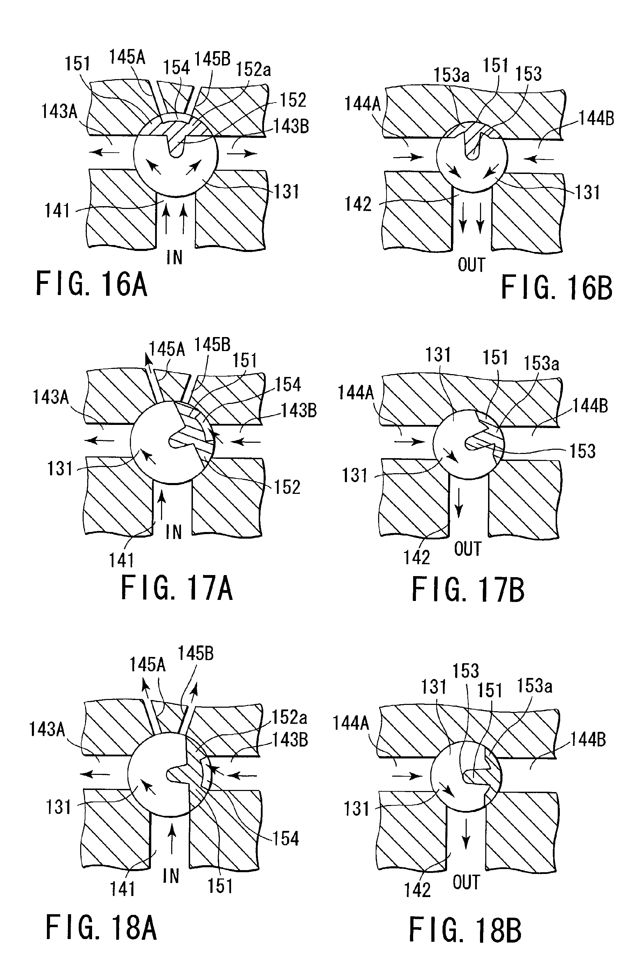

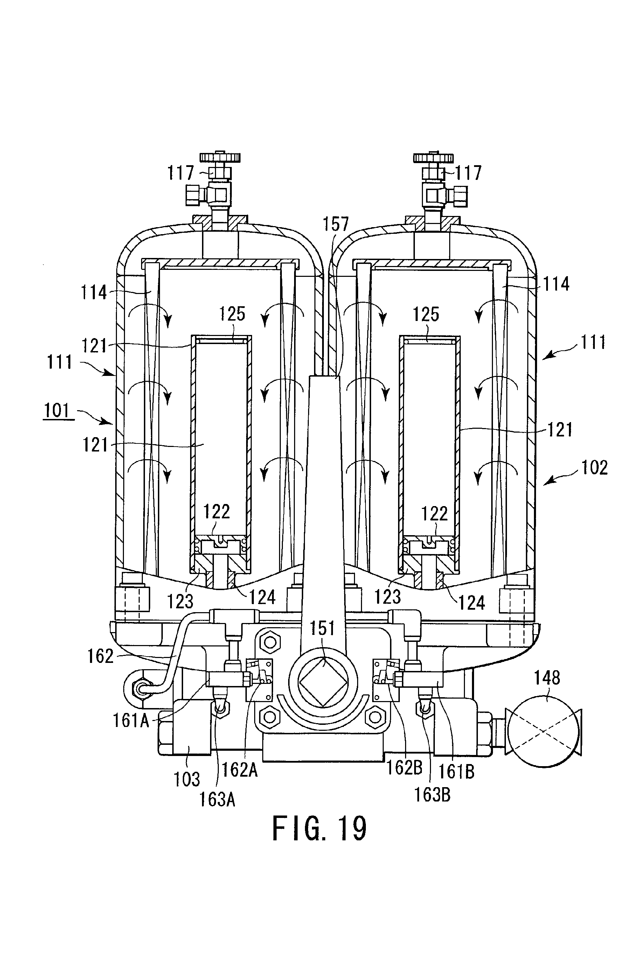

The operations of the filter apparatus with the above-described structure will now be described with reference to FIGS. 15 to 21. FIG. 15 is a view for explaining switch positions of the handle. FIGS. 16A and 16B to FIGS. 18A and 18B are views for explaining the switch positions of the switch valve. FIGS. 19 to 21 are cross-sectional views of the filter apparatus, illustrating the flow of a to-be-filtered fluid in each unit.

To begin with, a description is given of a case where both the left unit 101 and right unit 102 perform filtration of oil, which is a to-be-filtered fluid, as shown in FIG. 19.

In this case, at first, the handle 157 is vertically raised, as shown in FIG. 15. The position of the handle 157 is fixed by the locking mechanism (not shown). In this state, as shown in FIG. 16A, the front closing portion 152a of switch valve 151 is situated at the upper position in the front part of the switch valve chamber 131, thereby closing the auxiliary inlet ports 145A and 145B. The inlet 141 and inlet ports 143A and 143B in the front part of the switch valve chamber 131 are opened.

As is shown in FIG. 16B, the rear closing portion 153a is situated at the upper position in the rear part of the switch valve chamber 131. The outlet 142 and outlet ports 144A and 144B in the rear part of the switch valve chamber 131 are opened.

Thus, the oil flowing in the hydraulic circuit, which is a to-be-filtered fluid, is permitted to pass through the filter 114 in each of the left unit 101 and right unit 102. As shown by arrows in FIG. 19, the oil flows and is filtered.

Specifically, oil flows from the inlet 141 of the base block 103 into the front part of the switch valve chamber 131 partitioned by the front part 152 of the switch valve 151. In the left unit 101, the oil flows from the switch valve chamber 131 of base block 103 into the case 111 of left unit 101 via the inlet port 143A. The oil passes through the peripheral wall of the filter 114 from the outer peripheral side to the inner peripheral side. When the oil passes through the filter 114, foreign matter included in the oil is captured and removed by the filter 114.

The filtered oil, which includes no foreign matter, flows from the inner peripheral side of the filter 114 to the outlet port 144A of the base block 103, as shown in FIG. 16B. Then, the oil enters the rear part of the switch valve chamber 131 partitioned by the rear part 153 of the switch valve 151, and flows out to the hydraulic circuit (not shown) via the outlet 142.

In the right unit 102, as shown in FIG. 16A, the oil from the hydraulic circuit flows from the switch valve chamber 131 of base block 103 into the case 111 of right unit 102 via the inlet port 143B. The oil passes through the peripheral wall of the filter 114 from the outer peripheral side to the inner peripheral side. When the oil passes through the filter 114, foreign matter included in the oil is captured and removed by the filter 114.

The filtered oil, which includes no foreign matter, flows from the inner peripheral side of the filter 114 to the outlet port 144B of the base block 103, as shown in FIG. 16B. Then, the oil enters the rear part of the switch valve chamber 131 partitioned by the rear part 153 of the switch valve 151, and flows out to the hydraulic circuit (not shown) via the outlet 142.

At this time, the air valve 161A, 161B is closed to shut off the air pipe 163A, 163B. Thus, compressed air is not supplied to the cylinder 121 of each unit 101, 102. The piston 122 in each unit 101, 102 is at rest on the support ring 123 provided at the lower end of the cylinder 121 due to the weight of the piston 122 itself and the internal pressure. In other words, the piston 122 stays at the standby position, which is the descent limit position.

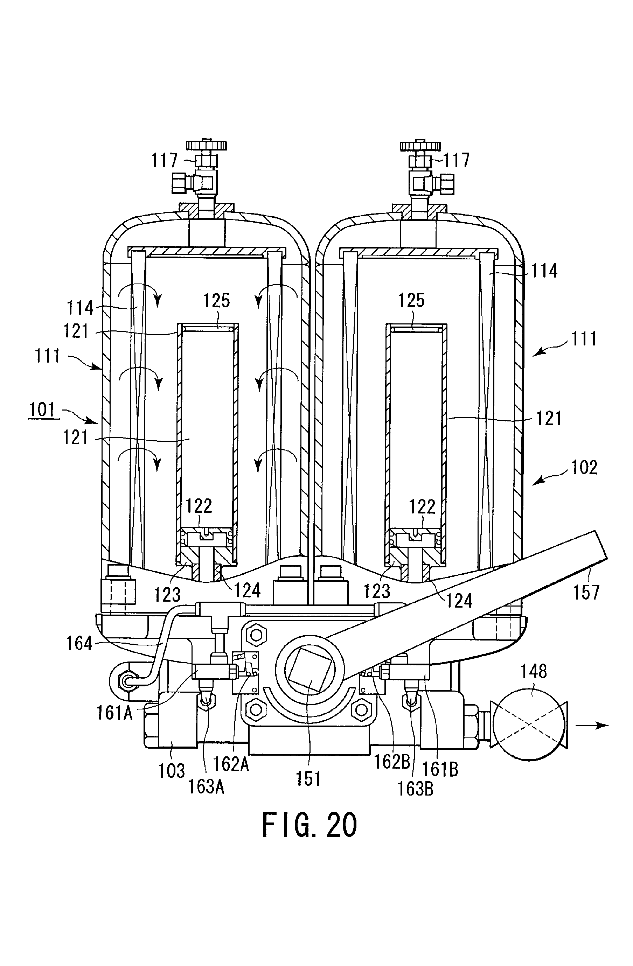

A description is given of the state, as shown in FIG. 20, in which the left unit 101 performs filtration while the right unit 102 stops filtration.

In this case, as shown in FIG. 15, the handle 157 is turned from the vertical position to the right side, for example, at an angle of 65°. The switch valve 151 rotates along with the handle 157. Thereby, as shown in FIG. 17A, the front closing portion 152a of switch valve 151 is inclined to the right side at an angle of 65°, and closes the auxiliary inlet port 145B and the right-hand inlet port 143B in the front part of the switch valve chamber 131.

Note that the drain discharge recess portion 154 formed at the front closing portion 152a is open to the opening of the inlet port 143B. The inlet 141 and inlet port 143A are opened. The rear closing portion 153a, as shown in FIG. 17B, is inclined to the right side at an angle of 65°, and closes the right-hand outlet port 144B in the rear part of the switch valve chamber 131. The outlet 142 and outlet port 144A are opened. Thus, in the left unit 101, oil is permitted to pass through the filter 114, and like the above-described case, the oil flows and is filtered.

In the right unit 102, the inlet port 143B and the outlet port 144B are closed. Thus, the path through which the oil in the case 111 flows to the outside of the case 111 is shut off, and the oil remains in the case 111. Thereby, the oil filtration operation in the right unit 102 is stopped.

As is shown in FIG. 17A, the drain discharge recess portion 154 of front closing portion 152a of switch valve 151 partially faces the inlet port 143B. Thus, if oil containing foreign matter, that is, drain, is present in the case 111 of the right unit 102, the drain flows through the inlet port 143B and enters the drain discharge recess portion 154 of front closing portion 152a. Further, the oil flows through a region defined between the drain discharge groove 155 of switch valve 151 and the drain discharge groove 146 of switch valve chamber 131, and then flows out to the drain discharge hole 147 of base block 103. Therefore, drain can be discharged in the right unit 102. At this time, the right unit 102 may be disassembled and cleaned.

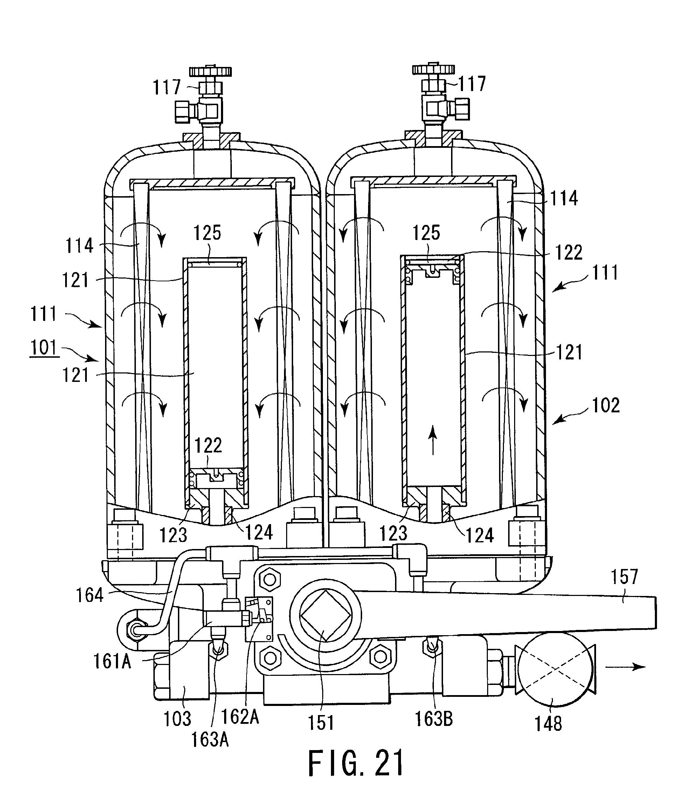

A description is given of a case where the left unit 101 performs filtration and the filter 114 in the right unit 102 is cleaned, as shown in FIG. 21.

In this case, as shown in FIG. 15, the handle 157 is turned to the right from the vertical position to the horizontal position, e.g. at 90°. As is shown in FIG. 18A, the front closing portion 152a of switch valve 151 is turned to the right at 90° and closes the right-hand inlet port 143B in the front part of the switch valve chamber 131. The entirety of the drain discharge recess portion 154 formed in the front closing portion 152a faces the opening of the inlet port 143B.

The inlet 141, inlet port 143A and auxiliary inlet ports 145A and 145B are opened. The rear closing portion 153a, as shown in FIG. 18B, is turned to the right at 90°and closes the right-hand outlet port 144B in the rear part of the switch valve chamber 131. The outlet 142 and outlet port 144A are opened. Thus, in the left unit 101, oil flows through the filter 114, as shown by arrows in FIG. 21, and the filtration operation is performed.

In the right unit 102, the inlet port 143B and outlet port 144B are closed. Thus, the path, through which the oil that has entered the case 111 and passed through the filter 114 flows out of the case 111, is shut off. Hence, the filtration operation is stopped. The drain discharge recess portion 154 of the front closing portion 152a of switch valve 151 faces the opening of the inlet port 143B. Therefore, the oil (drain) in the case 111 of right unit 102 can be discharged to the outside.

When the handle 157 is turned to the right from the vertical position to the horizontal position at 90°, the cam 157a formed on the handle 157 pushes the switch 162B provided on the air valve 161B, which is disposed on the right side in FIG. 6 relative to the switch valve 151. Thus, the switch 162B is turned on. If the switch 162B is turned on, the air valve 161B is opened to permit communication between the air conduit 164 and air pipe 163B. Consequently, compressed air supplied from the compressor via the air pipe 163 flows through the air pipe 163B via the air valve 161B and enters the support hole 135B from the hole 135a formed at the right part of the base block 103.

Further, the compressed air flows through the support pipe 124 and support ring 123 of the right unit 102 and enters the cylinder 121 from its lower end. The piston 122, which is at rest on the lower end ring 123 at the lower end of the cylinder 121 and stays in the standby position, is pushed up by the compressed air. The piston 122 quickly ascends within the cylinder 121, abuts on the ring 125 provided at the upper end of the cylinder 121, and stops. This stop position is the cleaning position. By the quick elevation of the piston 122, the oil in the cylinder 121 is rapidly pushed out from the upper end opening of the cylinder 121 into the inside of the filter 114.

In accordance with the elevation of the piston 122, the lower region within the cylinder 121, which is partitioned by the piston 122, enlarges and the amount of compressed air entering in this region increases, thus further pushing up the piston 122. Inversely, with the elevation of the piston 122, the upper region within the cylinder 121, which is partitioned by the piston 122, becomes smaller, and the oil in this region is pushed out of the cylinder 121.

If the oil in the cylinder 121 is rapidly pushed out into the inside of the filter 114 in this manner, the oil present on the inner peripheral side of the filter 114 is pressurized by the oil pushed out of the cylinder 121 and quickly moves radially outward of the filter 114. The oil is passed through the filter 114 from the inner peripheral side to the outer peripheral side.

When the oil rapidly moves and passes through the filter 114, it applies an impact on foreign matter attached to the outer periphery or inside of the filter 114. Thereby, the oil strongly strikes the foreign matter off the filter 114.

The oil pushed out of the cylinder 121 by the elevation of the piston 122 can uniformly apply pressure on the oil within the filter 114 over the entire periphery of the filter 114. Accordingly, the oil is rapidly passed through the peripheral wall of the filter 114 uniformly over the entire periphery of the filter 114, thus removing the foreign matter.

The oil passed through the filter 114 flows, along with the foreign matter, to the inlet port 143B of the base block 103 located below the case 111. Further, the oil flows into the drain discharge recess portion 154 of the front closing portion 152 of switch valve 151, which faces the opening of the inlet port 143B of the switch valve chamber 131. Subsequently, the oil flows through the path defined between the drain discharge groove 155 of switch valve 151 and the drain discharge groove 146 of switch valve chamber 131, and then flows out to the drain discharge hole 147 of base block 103.

In this case, the path defined between the drain discharge groove 155 of switch valve 151 and the drain discharge groove 146 of switch valve chamber 131 has an annular shape surrounding the periphery of the switch valve 151. Thus, the oil can freely flow through this path from the drain discharge recess portion 154 and can easily flow to the drain discharge hole 147. In this manner, the oil flows in the reverse direction, removes the foreign matter adhering to the filter 114, and cleans the filter 114.

In short, when the filter 114 of the right unit 102 is cleaned, the oil freely flows through this path from the drain discharge recess portion 154 into the drain discharge hole 147. Therefore, even when the to-be-filtered fluid is incompressible oil, the oil can be reversely passed through the peripheral wall of the filter 114, thereby to remove the foreign matter.

On the other hand, as shown in FIG. 18A, the right-hand auxiliary inlet port 145B in the switch valve chamber 131 is opened, and part of the oil coming into the inlet 141 flows through the auxiliary inlet port 145B into the case 111 of the right unit 102.

The oil from the auxiliary inlet port 145B joins the oil, which is pushed by the piston 122 to reversely flow from the inner peripheral side to the outer peripheral side of the peripheral wall of the filter 114, and thus includes the foreign matter. The mixed oil flows through the inlet port 143B of base block 103 into the switch valve chamber 131. Then, the oil flows from the drain discharge recess portion 154 of front closing portion 152 of switch valve 151 through the path defined between the drain discharge groove 155 of switch valve 151 and the drain discharge groove 146 of switch valve chamber 131, and then enters the drain discharge hole 147 of base block 103.

The oil coming into the case 111 through the auxiliary inlet port 145B is rapid and has momentum. Thus, the oil reversely flowing from the inside to the outside of the filter 114 is pulled by the oil from the auxiliary inlet port 145B and quickly flows into the drain discharge hole 147. Therefore, the foreign matter-containing oil flowing reversely from the inside to the outside of the filter 114 smoothly flows out without staying in the case 111. This is also advantageous in smoothly cleaning the filter 114.

The foreign matter-containing oil flows to the outside from the drain discharge hole 147 via the drain discharge valve 148. The oil is then delivered to the drain process apparatus. When the filter 114 is cleaned, the drain discharge valve 148 is opened.

The supply of compressed air to the cylinder 121 is stopped for a predetermined time period, and the piston 102 is made to stay at the upper end of the cylinder 121 for a predetermined time period. When the oil in the case 111 has reversely passed through the peripheral wall of the filter 114 and the cleaning of the filter 114 is completed, the operation of the compressor is stopped.

Thereby, the compressed air in the cylinder 121 flows reversely through the air pipe 163B and air conduit 164, and is discharged to the outside. As a result, the piston 122 descends within the cylinder 121 and again rests on the support ring 123. Thereafter, if the handle 157 is rotated to the vertical position, the cam 157a is separated from the switch 162B, and the switch 162B is turned off. Accordingly, the air valve 161B is restored to the non-operative state and closed.

As has been described above, in the right unit 102, the oil is made to reversely flow within the case 111, thereby cleaning the filter 114. In this embodiment, the means for causing the compressed air, or the pressure fluid, to flow and the means for discharging the compressed air are commonly used.

When the handle 157 is rotated from the vertical position to the left at 65°, as shown in FIG. 15, the filtration operation of the left unit 101 is stopped and the right unit 102 performs the filtration operation. In this case, the position of the switch valve 151 and the flow of oil are reversed in the right-and-left direction, relative to the above-described case where the handle 157 is rotated from the vertical position to the right at 65°.

When the handle 157 is rotated to the left from the vertical position to the horizontal position at 90°, as shown in FIG. 15, the left unit 101 performs the cleaning operation and the right unit 102 performs the filtration operation. In this case, the position of the switch valve 151 and the flow of oil are reversed in the right-and-left direction, relative to the above-described case where the handle 157 is rotated to the right from the vertical position to the horizontal position at 90°.

As has been described above, according to the present embodiment, the two units can be provided in combination, wherein each case is simply equipped with the cleaning means, and the cleaning means is operated with the supply of pressure fluid. Thereby, a strong impact is applied to the filter, and the foreign matter adhering to the filter can easily and exactly be removed.

With use of the switch valve, the oil intake section and oil discharge section are commonly used for the two units 101 and 102. Thereby, compared to the case where each of the units 101 and 102 is singly provided, the construction for the oil intake section and oil discharge section can be simplified and the start and stop of the filtration operations of the two units 101 and 102 can easily be performed by the operation of the switch valve. Moreover, this construction is combined with the compressed air feeding circuit, and thus the start/stop of the cleaning operation of the filter can be performed in interlock with the start/stop of the filtration operation of the two units 101 and 102 by operating the switch valve.

In the fourth embodiment, two units for filtering oil are provided. The number of units, however, is not limited, and three or more units may be provided. In this case, too, the oil intake means and discharge means, and the compressed air intake means and discharge means may be commonly used.

In this embodiment, the to-be-filtered fluid intake means and discharge means are commonly used in a plurality of units. The construction of the to-be-filtered fluid intake means and discharge means for the plural units can be simplified, and the start/stop of the operation for filtering the to-be-filtered fluid in each unit can easily be effected.

The pressure fluid intake means for feeding pressure fluid to the cleaning means provided in each of a plurality of units and the pressure fluid discharge means for discharging the pressure fluid are commonly used in a plurality of units. The construction of the pressure fluid intake means and pressure fluid discharge means for the plural units can be simplified, and the start/stop of the operation for cleaning the filter in each unit can easily be effected.

Making use of the configuration in which a plurality of units are combined, the structure and operation of the equipment belonging to the units can greatly be simplified, compared to the configuration in which each unit is singly provided.

Moreover, making use of the configuration of the combined units, cleaning can be performed without stopping the flow of the to-be-filtered fluid in the line for circulating the to-be-filtered fluid.

In the fourth embodiment, the cylinder and piston used as the cleaning means may be replaced with a bag-type cleaning member that is supplied with compressed air and expands, as employed in the first and second embodiments.

The present invention is not limited to the above-described embodiments, and various modifications can be made. In the case where the to-be-filtered fluid is caused to flow from the outer peripheral side to the inner peripheral side of the filter, as in the third and fourth embodiments, the cylinder and piston, which are the cleaning means, are provided on the inner peripheral of the filter, that is, on the downstream side of the flow of the to-be-filtered fluid. However, in the case where the to-be-filtered fluid is caused to flow from the inner peripheral side to the outer peripheral side of the filter, the cylinder and piston, which are the cleaning means, may be provided on the outer peripheral of the filter, that is, on the downstream side of the flow of the to-be-filtered fluid.

## Claims

1. A filter apparatus that filters a to-be-filtered fluid and removes foreign matter included in the to-be-filtered fluid, **characterized by** comprising:
a case (1, 111);
to-be-filtered fluid intake means (17, 141) for causing the to-be-filtered fluid to flow into the case;
to-be-filtered fluid discharge means (18, 142) for discharging the to-be-filtered fluid from the case to the outside;
a filter (2, 114), provided within the case, for capturing foreign matter by passing the to-be-filtered fluid through, while the to-be-filtered fluid flows in from the to-be-filtered fluid intake means and flows out from the to-be-filtered fluid discharge means;
cleaning means (3, 4, 51, 121), provided within the case, for pressurizing the to-be-filtered fluid within the case, causing the to-be-filtered fluid to pass through the filter (2, 114) in a direction reverse to a direction in which the to-be-filtered fluid is filtered, and removing the foreign matter adhering to the filter;
pressure fluid intake means (37, 164) for making a pressure fluid act on the cleaning means, and causing the cleaning means to pressurize the to-be-filtered fluid within the case (1, 111); and
pressure fluid discharge means (38, 135a) for discharging the pressure fluid that is supplied from the pressure fluid intake means to act on the cleaning means.

2. The filter apparatus according to claim 1, **characterized in that** the case (1, 111) is provided with drain discharge means (22, 147) for discharging to the outside of the case the to-be filtered fluid containing the foreign matter removed from the filter (2, 114), when the foreign matter adhering to the filter is removed by the cleaning means (3, 4, 51, 121) .

3. The filter apparatus according to claim 2, **characterized in that** the drain discharge means (38, 135a) discharges the to-be-filtered fluid containing the foreign matter to the outside of the case (1, 111) in a state in which inflow of the to-be-filtered fluid from the to-be-filtered fluid intake means (17, 141) and outflow of the to-be-filtered fluid from the to-be-filtered fluid discharge means (18, 142) are prohibited.

4. The filter apparatus according to claim 1, **characterized in that** the filter (2, 114) has a cylindrical shape and is disposed to be concentric within the case (1, 111), and
the to-be-filtered fluid is passed through a peripheral wall of the filter from an outer peripheral side to an inner peripheral side thereof and is thus filtered.

5. The filter apparatus according to claim 2, **characterized in that** the cleaning means includes a cylinder (51, 121) disposed within the filter (2, 114) to be concentric with the filter, and a piston (52, 122) movably provided within the cylinder and configured to receive a pressure of the pressure fluid from the pressure fluid intake means (37, 164) and to thereby move within the cylinder, and
when the foreign matter adhering to the filter is to be removed, the piston is moved within the cylinder by the pressure fluid from the pressure fluid intake means, and the to-be-filtered fluid within the cylinder is caused to flow out under pressure.

6. The filter apparatus according to claim 2, **characterized in that** the cleaning means (3, 4) is a cleaning member formed of an expandible, contractible material in a bag-like shape, the cleaning means is provided within the filter (2), and the cleaning means expands when the pressure fluid is supplied from the pressure fluid intake means (37) into the cleaning means, and pressurizes the to-be-filtered fluid remaining in the filter.

7. A filter apparatus that filters a to-be-filtered fluid and removes foreign matter included in the to-be-filtered fluid, **characterized by** comprising:
a base block (103) having a plurality of pairs of inlet ports (143A, 143B) and outlet ports (144A, 144B) in an upper surface thereof;
a plurality of cases (111) each having a cylindrical shape with a closed upper end face and an opened lower end face, one of said inlet ports and one of said outlet ports being opposed to the opened lower end face of the case, and the plurality of cases being fluid-tightly provided on the upper surface of the base block (103);
to-be-filtered fluid intake means (141), provided in the base block (103), for feeding a to-be-filtered fluid into each of the plurality of cases;
to-be-filtered fluid discharge means (142), provided in the base block, for discharging to the outside the to-be-filtered fluid fed into each of the plurality of cases;
a filter (114), provided within each of the cases (111), for capturing foreign matter by passing the to-be-filtered fluid through, while the to-be-filtered fluid flows in from the to-be-filtered fluid intake means (141) and flows out from the to-be-filtered fluid discharge means (142);
cleaning means (121, 122), provided within each of the cases, for pressurizing the to-be-filtered fluid within each case (111), causing the to-be-filtered fluid to pass through the filter (114) in a direction reverse to a direction in which the to-be-filtered fluid is filtered, and removing the foreign matter adhering to the filter;
pressure fluid intake means (164) for making a pressure fluid act on the cleaning means (121, 122), and causing the cleaning means to pressurize the to-be-filtered fluid within the case (111); and
pressure fluid discharge means (135a) for discharging the pressure fluid that is supplied from the pressure fluid intake means (164) to act on the cleaning means (121, 122).

8. The filter apparatus according to claim 7, **characterized in that** the base block (103) is provided with a pair of cases (111),
the base block is provided with switch means (131, 151) for effecting switching between a first state in which the to-be-filtered fluid is fed to the pair of cases (111) and filtered, and a second state in which the to-be-filtered fluid is fed to one of the pair of cases (111) and filtered while foreign matter adhering to the filter in the other case is removed.

9. The filter apparatus according to claim 8, **characterized in that** the switch means (131, 151) is able to effect switching to a third state in which the to-be-filtered fluid is fed to one of the pair of cases and filtered while flow of the to-be-filtered fluid to the other case is stopped.

10. The filter apparatus according to claim 8, **characterized in that** the switch means comprises a switch valve chamber (131) formed in the base block (103), a switch valve (151) rotatably inserted in the switch valve chamber, and operation means (157) for effecting switching between said first state and said second state by rotating the switch valve.

11. The filter apparatus according to claim 8, **characterized in that** the switch means (131, 151) includes drain discharge means (147) for discharging the to-be-filtered fluid including foreign matter from the case to the outside, when foreign matter adhering to the filter (114) in one of the cases (111) is removed.

12. The filter apparatus according to claim 11, **characterized in that** the switch means (131, 151) includes auxiliary intake means (145A, 145B) for causing, when foreign matter adhering to the filter (114) in one of the cases (111) is to be removed, part of the to-be-filtered fluid from the to-be-filtered fluid intake means (141) to flow into the case.

13. The filter apparatus according to claim 7, **characterized in that** the cleaning means (121, 122) includes a cylinder (121) disposed within the filter to be concentric with the filter, and a piston (122) movably provided within the cylinder and configured to receive a pressure of the pressure fluid from the pressure fluid intake means (141), and
when the foreign matter adhering to the filter (114) is to be removed, the piston (122) is moved within the cylinder (121) by the pressure fluid from the pressure fluid intake means (141), and the to-be-filtered fluid within the cylinder (121) is caused to flow out under pressure.

14. The filter apparatus according to claim 13, **characterized in that** when the filter (114) in one of the cases (111) is to be cleaned by a switching operation of the switch means (131, 151), the pressure fluid is fed from the pressure fluid intake means (141) to the associated cleaning means (121, 122) in interlock with the switching operation of the switch means (131, 151).

15. The filter apparatus according to claim 7, **characterized in that** the to-be-filtered fluid is a liquid, and the pressure fluid is a gas.
